# EUROPEAN PATENT APPLICATION

(11) **EP 1 690 888 A1**
(43) Date of publication of application: **16.08.2006**
(21) Application number: 06001550.0
(22) Date of filing: 25.01.2006
(51) Int. Cl.: C08J 3/14, C08L 39/06

(54) **Method of drying a vinyl pyrrolidone type polymer**

(30) Priority: 14.02.2005 JP 2005036959
(71) Applicant: DAI-ICHI KOGYO SEIYAKU CO., LTD., Shimogyo-ku Kyoto (JP)
(72) Inventor: Fujise, Keiichi, Shiga 525-0032 (JP)
(74) Representative: Strehl Schübel-Hopf & Partner

(57) **Abstract**

A method of drying a vinyl pyrrolidone type polymer in which a solution containing a vinyl pyrrolidone type polymer and water is coated by a press roll on a heat conduction surface of a heating surface contact type drier and dried, and the dried vinyl pyrrolidone type polymer is peeled by peeling means from the heat conduction surface, which is free of the requirement for frequently stopping the drying operation for maintenance such as removal of rust, capable of continuous drying and decreased at cost, by using a press roll made of iron in which the surface is applied with a nickel plating treatment and then with a chromium plating treatment.

## Description

### [Technical Field]

The present invention concerns a method of drying a vinyl pyrrolidone type polymer.

### [Background Art]

Since vinyl pyrrolidone type polymers are highly safe and water soluble, they are used in a wide range of fields including the field of cosmetic fields, medical fields, etc.

As a method of drying a solution containing a vinyl pyrrolidone type polymer, a method of coating a solution thereof on a heat conduction surface of a heating surface contact type drier such as a drum drier by a press roll and then peeling the dried product by a scraper has been used (JP-A No. 2002-146033). The press contact surface of such a heating surface contact type drier has been formed so far of stainless steel, iron, titanium, or the like.

However, in a case where the press contact surfaces of heating surface contact type dryers are made of stainless steel, iron and titanium, they respectively involve the following problems. That is, since stainless steel has large heat expansion coefficient, and tends to be deformed thermally, it is difficult to increase the scale of the apparatus, namely to industrialize the process. Further, since the press contact surface is always in contact with a solution containing the vinyl pyrrolidone type polymer, it is liable to suffer from rust in a case of iron and requires to stop the drying operation on every predetermined time and remove the rust. Further, since titanium is expensive, it is not suitable to be used for large-scale apparatus.

Further, in a case of applying a surface treatment to iron with chromium plating, since the dried product of the vinyl pyrrolidone type polymer is a hard resin, in a case where there are scraping residues by a scraper, they are put between the heat conduction surface and the press roll to cause cracks in the chromium plating layer, a solution containing the vinyl pyrrolidone type polymer intrudes through the cracks to corrode iron thereby causing iron rust and it is also necessary to stop the drying operation on every predetermined time and remove the rust.

In a case of stopping the drying operation on every predetermined time and conducting maintenance as described above, since it is necessary for the maintenance to once cool the heated drier and, after the completion of the operation, to heat the same again. In a case where the maintenance is conducted frequently, it give rise to a problem of causing considerable loss in view of time and cost.

### [Disclosure of the Invention]

The present invention has been achieved in view of the foregoings and, in a case of drying a solution containing a vinyl pyrrolidone type polymer and water by a heating surface contact type drier such as a drum drier, it intends to provide a drying method capable of continuous operation with no requirement for frequently stopping the drying operation and capable of overcoming loss of time and cost in the prior art.

According to the drying method of the present invention, in a method of drying a vinyl pyrrolidone type polymer in which a solution containing a vinyl pyrrolidone type polymer and water is coated on a heat conduction surface of a heating surface contact type drier by a press roll and dried and the dried vinyl pyrrolidone type polymer is peeled from the heat conduction surface by peeling means, a press roll which is made of iron and applied with a nickel plating treatment and then with chromium plating treatment for the surface is used as the press roll.

In the drying method described above, it is preferred that the heating surface contact type drier has the surface of the heat conduction surface formed of iron.

Further, it is preferred that a solution containing the vinyl pyrrolidone type polymer and water is coated twice or more in stack on the heat conduction surface and then dried.

According to the method of drying the vinyl pyrrolidone type polymer of the invention, since it is not necessary to frequently stopping the drying operation and conduct maintenance as usual and continuous long time drying is possible, the efficiency of the operation can be improved and loss of time and cost in the prior art can be overcome.

In a case where the heat conduction surface of the heating surface contact type drier is made of iron, consumption of a scraper can be suppressed.

Further, the drying speed can be increased further by coating a solution containing the vinyl pyrrolidone type polymer and water twice or more in stack to the heat conduction surface and drying the same.

### [Brief Description of the Drawings]

Fig. 1 is a schematic cross sectional view of a single drum drier used in Example 1.
Fig. 2 is a schematic cross sectional view of a single drum drier used in Example 2.

The Reference Numerals and Signs denotes;
- 1, 11 :: heating drum,
- 1a, 11a :: heat conduction surface,

- 2, 12 :: scraper,
- 3, 4, 13, 14, 15 :: press roll,
- 6, 16 :: liquid feed pump,
- 7, 17 :: liquid feed line,
- 8, 18 :: dried product.

### [Preferred Embodiment of the Invention]

The vinyl pyrrolidone type polymer referred to in the invention includes vinyl pyrrolidone polymer and/or vinyl pyrrolidone copolymer, and the vinyl pyrrolidone polymer comprises a homopolymer of N-vinyl-2-pyrrolidone, and the vinyl pyrrolidone copolymer comprises N-vinyl-2-vinyl pyrrolidone and a comonomer copolymerizable therewith. The vinyl pyrrolidone type polymer can be obtained by the polymerization method known so far and is also commercially available.

Further, "solution containing a vinyl pyrrolidone type polymer and water" means a reaction solution after the polymerizing reaction of the vinyl pyrrolidone type polymer, or a solution obtained by dissolving a dried product of the vinyl pyrrolidone type polymer in a solvent to be described later, which is hereinafter referred to as a vinyl pyrrolidone type polymer containing solution. In the solution, the dried product, etc. are not necessarily dissolved entirely but may partially remain undissolved. The content of the vinyl pyrrolidone type polymer in the vinyl pyrrolidone type polymer containing solution is not particularly limited and it is preferably from 5 to 50% by weight and, more preferably, 10 to 40% by weight. In a case where the content is less than 5%, the production efficiency is poor to increase the cost and, in a case where it exceeds 50% by weight, the viscosity increases to worsen the working efficiency. Further, while water is a substance causing rust, the effect of the invention can be expected in a case where it is contained at 1% by weight or more in the vinyl pyrrolidone type polymer containing solution.

The heating surface contact type drier used in the invention is an apparatus of conducting drying by heating a material by the heat conduction from the surface heated by a heat medium, that is, from the heat conduction surface, and dried products of the vinyl pyrrolidone type polymer are obtained on the heat conduction surface by feeding the vinyl pyrrolidone type polymer containing solution from a material feeding device such as a liquid feeding pump to the heat conduction surface and coating the same by a press roller.

Specific examples of the heating surface contact type drier include a drum drier, and any of single drum drier, double drum drier, or twin drum drier can be used.

In the drum drier, the vinyl pyrrolidone type polymer containing solution is coated as a thin-film to the surface of a rotary drum heated from the inside by steams or other heat medium and drying the solution during one rotation, and dried products are scraped off by a scraper such as a doctor knife. The scraped dried products are optionally fabricated into various shapes such as a sheet shape, ribbon shape, rod shape, and powder.

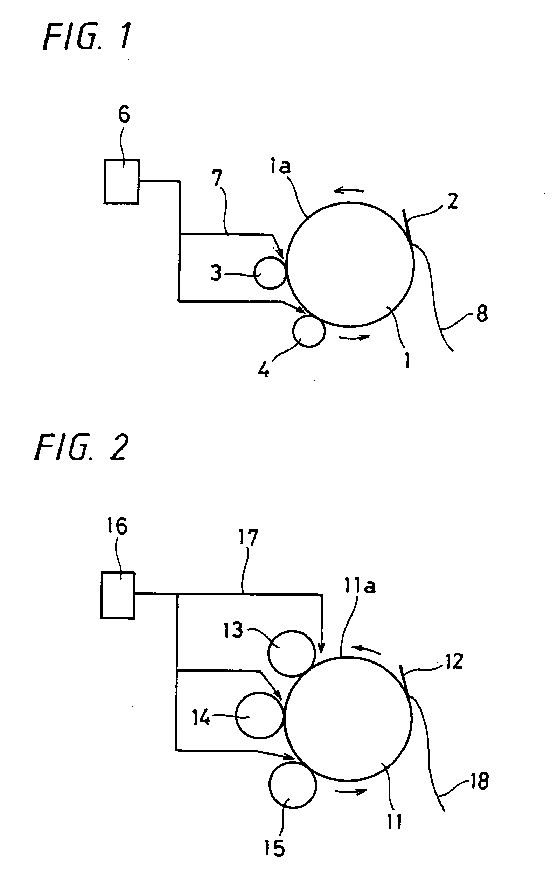

Fig. 1 and Fig. 2 are schematic cross sectional views showing the outline of an example of a single drum drier and peripheral devices thereof. In the drawings, numeral 1, 11 stands for a heating drum, 1a, 11a stands for a heat conduction surface thereof, 2, 12 stands for a scraper, 3, 4, 13, 14, 15 stands for a press roll, 6, 16 stands for a liquid feed pump, 7, 17 stands for a liquid feed line, 8, 18 stands for peeled dried products. In each device, a vinyl pyrrolidone type polymer containing solution fed from the liquid feed pump 6, 16 by way of the liquid feed line 7, 17 is coated by the press rolls 3, 4, 13, 14, 15 to the heat conduction surface 1a, 11a of the heating drum and the dried product 8, 18 is scraped by the scraper 2, 12. While the drawings show the cases where the press rolls are provided by the number of two and three, they are not restrictive but may be provided by the number of one or four or more.

In the invention, as the press roll, those made of iron in which the surface of iron at first treated with nickel plating and then with chromium plating are used. The thickness of the nickel plating layer is preferably about 1 to 1000 µm and the thickness of the chromium plate layer is also preferably about 1 to 1000 µm. By the use of such press roll, even when the vinyl pyrrolidone type polymer dried products are put between the press roll and the heat conduction surface, since nickel is ductile, iron in the inside does not suffer from corrosion by the vinyl pyrrolidone type polymer containing solution by the occurrence of cracks and the drying operation can proceed smoothly. Further, since the base material is iron, this is advantageous also in view of the cost.

The heat conduction surface of the drier may be any of those in which a heat medium is present in the inside and which constitutes a heating source for the material. The heat medium is not particularly limited and various known media can be used and specific examples of them include, for example, organic heat medium oil, warm water, steams, silicone oil, electric heater, etc. The material for the heat conduction surface is not particularly limited and any optional material can be applied such as stainless steel, iron, titanium, Teflon (registered trade mark) and rubber, and the consumption of the scraper can be suppressed by forming the surface with iron.

The area of the heat conduction surface (drum heating area) is preferably 5 m² or more in view of the production efficiency.

The temperature at the heat conduction surface is not particularly limited and it is preferably higher than the boiling point of the solvent for the vinyl pyrrolidone type polymer containing solution and, more preferably, higher by 10°C or more than the boiling point. Further, in a case of coating the vinyl pyrrolidone type polymer containing solution in stack, the temperature at the heat conduction surface is preferably lower by 10°C or more than the glass transition temperature of the vinyl pyrrolidone type polymer contained in the solution. Since this makes the film forming property of the polymer favorable, stack coating is facilitated. Specifically, it is within a range preferably from 80°C to 180°C, more preferably, from 100°C to 170°C and, further preferably, from 120°C to 160°C while depending on the vinyl pyrrolidone type polymer to be used, the solution temperature thereof and the method of supplying the solution. Further, the drying atmosphere may usually be that of atmospheric air and a relative humidity within a range from 0 to 60% is preferred in view of high hygroscopic property of the vinyl pyrrolidone polymer.

Also the tool of the peeling means for peeling the dried products is not particularly limited and a scraper such as a known doctor knife can be used.

In the invention, the drying speed can be further increased by coating a solution containing vinyl pyrrolidone type polymer and water twice or more in stack on the heat conduction surface. That is, in a case of a drum dryer, feeding (coating) and drying of the solution may be repeated during one rotation of a drum. In a case of second or succeeding feed of the solution, it is not always necessary that the coating film fed previously is completely dried and it may suffice that the film is dried substantially to such an extent as not causing troubles to the second or succeeding feed of the solution.

The drying time from the first coating of the solution to the peeling can be set to an optional time depending on the vinyl pyrrolidone type polymer to be used, the solution concentration thereof, the method of feeding the solution, type of the drier, etc. and it is usually within a range from 0.1 min to 60 min. For the coating thickness of the solution, it is preferably about from 0.05 mm to 10 mm and, more preferably, about from 0.1 mm to 5 mm also depending on the vinyl pyrrolidone type polymer to be used, the solution concentration thereof, the method of feeding the solution, the type of the drier, etc. The method of adjusting coating thickness is not particularly limited and an optional method of adjusting a clearance between the press roll and the heat conduction surface, adjusting the viscosity of the solution, adjusting the feed speed of the solution, etc. can be applied. While feeding of the solution can be conducted at any setting value of feeding speed, it is preferred to set the value while considering the balance between the productivity and the quality of the dried products (water content).

The water content in the dried products obtained by the drying method according to the invention is 10% or less based on wet products, and this can also be decreased to 5% or less. Further, it can be 1% or less by optimizing the conditions, etc. For the thickness of film products those of about 0.01 mm to 5 mm can be obtained while depending on the vinyl pyrrolidone type polymer to be used, the solution concentration thereof, the method of feeding the solution, etc.

### [Example]

Examples of the present invention are shown below but the invention is not restricted by the following examples.

### [Example 1]

A press roll (30 cm diameter) in which the surface of iron was applied with a nickel plating treatment (at 50 µm thickness) and then applied with a chromium plating treatment (at 50 µm thickness) was set to a single drum drier having a heating drum made of iron with 1.0 m diameter and 2.0 m width (drum heating area: 6 m²), at two positions each with a clearance to the heating drum of 0.3 mm and 0.1 mm respectively as shown in Fig. 1. Further, a scraper made of SUS 304 was attached. After introducing steams to the heating drum and setting the temperature at the heating surface of the heating drum to 140°C, the heating drum was rotated at a constant speed of 1 rpm and the press roll was rotated such that the circumferential speed of the outer periphery of the press roll was at a circumferential speed of the outer periphery of the heating drum. A vinyl pyrrolidone type polymer containing solution (Pitskol K-90L, manufactured by Daiichi Kogyo Seiyaku Co., vinyl pyrrolidone type copolymer content: 20% by weight, water content: 80% by weight) was supplied by a liquid feed pump at 50 kg/hr to two press rolls and, after drying, separated by the scraper to obtain a sheet-like dried product.

### [Example 2]

A press roll (50 cm diameter) in which the surface of iron was applied with nickel plating treatment (10 µm thickness) and then applied with chromium plating treatment (100 µm thickness) was set to a single drum drier having a heating drum made of iron with 2.0 m diameter and 4.0 m width (drum heating area: 25 m²) at three positions with the clearance to the heating drum of 0.3 mm, 0.3 mm, and 0.1 mm respectively as shown in Fig. 2. Further, a scraper made of SUS 304 was attached. After introducing steams to the heating drum and setting the temperature at the heating surface of the heating drum to 140°C, the heating drum was rotated at a constant speed of 1 rpm and the press roll was rotated such that the circumferential speed of the outer periphery of the press roll was at a circumferential speed of the outer periphery of the heating drum. The same vinyl pyrrolidone type polymer containing solution as used in Example 1 (Pitskol K-90L, manufactured by Daiichi Kogyo Seiyaku Co.) was fed by a liquid feed pump at 300 kg/hr to three press rolls and, after drying, separated from the scraper to obtain a sheet-like dried product.

### [Comparative Example 1]

Drying was conducted in the same manner as in Example 1 except for changing the press roll to that made of iron.

### [Comparative Example 2]

Drying was conducted in the same manner as in Example 1 except for changing the press roll to that of made iron applied with a chromium plating treatment (100 µm thickness).

### [Comparative Example 3]

The press roll causing rust in Comparative Example 2 was cleaned and drying was conducted in the same manner as in Example 2.

For each of the drying methods described above, the drying operation was continued till troubles occurred to the operation and the upper limit for the time capable of continuous drying was examined and evaluated by the following standards. The result is shown in Table 1.

Continuous drying possible time;
× : from 0 hours to less than 120 hours
○ : 120 hours or more

**[Table 1]**

| | **Continuous drying possible time** | **Cause requiring maintenance** |
|---|---|---|
| **Example 1** | **○ (168 hrs or more)** | **none** |
| **Example 2** | **○ (120 hrs)** | **Scraper exchange due to impossible scraping** |
| **Comp. Example 1** | **× (5 hrs)** | **Press roll cleaning for the occurrence of rust** |
| **Comp. Example 2** | **× (30 hrs)** | **Press roll cleaning for the occurrence of rust** |
| **Comp. Example 3** | **× (7 hrs)** | **Press roll cleaning for the occurrence of rust** |

### [Industrial Field of Application]

The present invention is utilizable as a method of drying a vinyl pyrrolidone polymer used as a starting material in various fields such as cosmetic fields and medical fields.

## Claims

1. A method of drying a vinyl pyrrolidone type polymer in which a solution containing a vinyl pyrrolidone type polymer and water is coated on a heat conduction surface of a heating surface contact type drier by a press roll and dried and the dried vinyl pyrrolidone type polymer is peeled from the heat conduction surface by peeling means, **characterized in that**
a press roll which is made of iron and applied with a nickel plating treatment and then with a chromium plating treatment for the surface is used as the press roll.

2. A drying method according to claim 1, **characterized in that** the heating surface contact type drier having the surface of the heat conduction surface formed of iron is used.

3. A drying method according to claim 1 or 2, **characterized in that** a solution containing the vinyl pyrrolidone type polymer and water is coated twice or more in stack on the heat conduction surface and then dried.
